# EUROPÄISCHE PATENTSCHRIFT

(11) **EP 1 967 817 B1**
(45) Veröffentlichungstag und Bekanntmachung des Hinweises auf die Patenterteilung: **06.10.2010**
(21) Anmeldenummer: 08007358.8
(22) Anmeldetag: 27.08.2004
(51) Int. Cl.: G01B 7/06

(54) **Vorrichtung zum Vermessen der Dicke und/oder Länge von Objekten**
Device for measuring the thickness and/or length of objects
Dispositif de mesure de l'épaisseur et/ou de la longueur d'objets

(30) Priorität: 27.08.2003 DE 10339778
(43) Veröffentlichungstag der Anmeldung: 10.09.2008
(62) Teilanmeldung aus: 04762722.9
(73) Patentinhaber: Kraemer, Thilo, 64291 Darmstadt (DE)
(72) Erfinder: Kraemer, Thilo, 64291 Darmstadt (DE)
(74) Vertreter: Mierswa, Klaus

(56) Entgegenhaltungen:
- US-A- 4 393 717
- US-A- 5 029 304

## Beschreibung

Die Erfindung betrifft eine Vorrichtung zum Vermessen der Dicke und/oder Länge von Objekten von fester oder gelartiger Konsistenz, insbesondere von pharmazeutischen Objekten, wie Tabletten, Pillen oder Oblongs.

Es sind magnetische Längenmesssysteme bekannt, welche mittels eines Magnetbandes mit Polteilung und einem Magnetfeldsensor arbeiten, der dem Magnetband gegenüberstehend montiert ist. Das Magnetband steht dabei fest und der Magnetfeldsensor ist berührungslos und damit weitestgehend verschleißfrei und gegen Verschmutzungen unempfindlich. Der Magnetfeldsensor benötigt ein Kabel zur Weiterleitung der elektrischen Impulse, wobei bei der Bewegung des Magnetfeldsensors das Kabel geschleppt werden muss und dieses schleppkettentauglich sein muss, was einen erhöhten Aufwand an Material und Kosten verursacht. Beim Vorbeifahren der Polteilungen des Magnetbandes am Magnetfeldsensor gibt dieser elektrische Signale aus, welche einer Auswerteelektronik aufgegeben und gezählt wird. Die aufgrund der Polteilung des Magnetbandes erhaltenen elektrischen Signale des Magnetfeldsensors werden in der Auswerteelektronik gezählt und entsprechend der Polteilung in eine Längenmessung transformiert.

Durch die Firma Fritz Kübler GmbH, www.kuebler.com, Veröffentlichungsvermerk R1002250310003ES, 78054 Villingen-Schwenningen, ist ein derartiges lineares Messsystem bekannt geworden, bestehend aus einem beweglichen Magnetsensor und einem feststehenden Magnetmessband mit einem Polabstand von 2mm von Pol zu Pol, so dass sich alle 2mm ein periodisches Indexsignal als Zählimpulse ergibt. Der Magnetsensor erreicht eine Auflösung von 0,025mm bei Vierfachauswertung bzw. von 0,05mm-0,1mm. Somit bedeutet die Aufeinanderfolge von zwei benachbarten Zählimpulsen die Zurücklegung einer vorbestimmten Wegstrecke des Magnetsensors, die durch dessen Auflösung bestimmt ist.

In der pharmazeutischen Industrie müssen bei der Herstellung von pharmazeutischen Objekten, wie Tabletten, Pillen oder Oblongs, verschiedene Parameter der Objekte, oft fortlaufend, überprüft und gemessen werden, wie zum Beispiel das Gewicht, die Zerberstkraft oder die Dicke oder Länge. Die bisher verwendeten Messeinrichtungen zum Vermessen der Dicke oder Länge von Tabletten, Pillen oder Oblongs arbeiten entweder zu langsam oder zu ungenau oder beides.

Die US 5,029,304 offenbart einen Sensor mit einem magnetischen Längenmesssystem mit elektrischer Auswerteschaltung zur Bestimmung der Position oder Abmessungen eines Objekts. Der Sensor umfasst eine feststehende magnetische Detektoranordnung sowie ein Betätigungsmedium, welches die Detektoren zur Ausgabe eines binären Gray-Codes veranlasst. Das Betätigungsmedium ist vorzugsweise ein an der Detektoranordnung vorbei beweglich angeordneter Dauermagnet mit mindestens drei Polsegmenten.

Aus der US 4,393,717 ist eine Vorrichtung zum Prüfen von medizinischen Tabletten auf Dicke, Durchmesser und Härte hervor, mit einer Auflage für die Tabletten und einer Anschlagplatte. Diese ist Teil eines Stempels, welcher mittels eines Luftdruckzylinders vertikal so verfahren werden kann, dass die Anschlagplatte von oben auf der Tablette aufsetzt. Aus der Vertikalposition des Stempels bei auf der Tablette aufliegender Anschlagplatte kann die Dicke der Tablette bestimmt werden. Die Vertikalposition des Stempels wird mittels einer Diode und eines Photopotentiometers gemessen. Die Dicke der Tablette kann mittels eines weiteren, horizontal vefahrbaren Stempels bestimmt werden, dessen Horizontalposition ebenfalls mittels einer Diode und eines Photopotentiometers gemessen wird. Der Bewegungsablauf wird mittels eines Computers gesteuert.

Der Erfindung liegt die Aufgabe zugrunde, bei einer Vorrichtung zum Vermessen der Dicke von Objekten von fester oder gelartiger Konsistenz, insbesondere von pharmazeutischen Objekten, wie Tabletten, Pillen oder Oblongs, ein magnetisches Längenmesssystem für eine derartige Vorrichtung dienstbar zu machen.

Die Aufgabe wird dadurch gelöst, dass die Vorrichtung aus einer Basis besteht, auf der sich eine Säule senkrecht erhebt, und entweder die Basis oder die Säule eine Auflagefläche für das zu messende Objekt aufweist, wobei längs der Säule ein magnetisches Längenmesssystem angeordnet ist bestehend aus einem eine Vielzahl von Polteilungen aufweisenden Magnetband und einem dem Magnetband gegenüber befindlichen, feststehend montierten Magnetfeldsensor und aus einer an den Magnetfeldsensor angeschlossenen elektrischen Auswerteschaltung, wobei das Magnetband auf einem Schlitten montiert ist, welcher an oder in der Säule längs der Säule am Magnetfeldsensor vorbei mittels einer einen Elektromotor zum Bewegen des Schlittens aufweisenden Bewegungseinrichtung motorisch beweglich gehaltert ist und an dem Magnetband ein auskragender Arm angreift, welcher die Bewegung des Magnetbandes mitzumachen imstande ist, zur Anlage an dem zu messenden Objekt.

Die erfindungsgemäße Vorrichtung weist den Vorteil auf, dass aufgrund der Tatsache, dass der Magnetfeldsensor feststehend montiert ist und das Magnetband beweglich auf und ab bzw. hin und her verschieblich angeordnet ist, keine bewegliche Kabelführung des Magnetfeldsensors vorhanden ist, sondern nur eine mechanische Bewegung des Magnetbandes gegeben ist. Die ansonsten notwendige Schleppkettentauglichkeit des Kabels entfällt. Eine derartige Ausgestaltung, dass nämlich das Magnetband verfährt und der Magnetfeldsensor feststeht, ist für die Vermessung von kurzen Strecken am besten geeignet, wobei es sich bei der Dickenmessung von derartigen Objekten, wie es pharmazeutische Objekte, Tabletten, Pillen oder Oblongs in der Regel sind, um kurze zu vermessende Strecken handelt. Das magnetische Längenmesssystem ist hier ein translatorisches arbeitendes Längenmesssystem.

Bei der Anordnung des Magnetbandes innerhalb der Säule kann innerhalb derselben eine Nut angeordnet sein, in welcher der Schlitten auf und ab bzw. hin und her beweglich gehaltert ist.

Der Schlitten weist somit eine Einrichtung zum Bewegen desselben auf, wobei ein Elektromotor zum Bewegen des Schlittens und damit des Magnetbandes auf die Einrichtung einwirkt.

Die Einrichtung zum Bewegen des Schlittens kann eine Zahnung aufweisen, welche seitlich am Schlitten angeordnet ist, in welche ein Antriebszahnrad kämmt, welches über den Elektromotor antreibbar ist. In vorteilhafter Weise kann bei der Absenkung des auskragenden Armes in Richtung des zur vermessenden Objektes das Antriebszahnrad außer Eingriff in die Zahnung des Schlittens genommen werden, so dass der Schlitten unter Einwirkung der Schwerkraft sich nach unten auf das Objekt hin bewegt.

Des Weiteren kann an dem Schlitten eine Feder angreifen, deren Federkraft bestrebt ist, den Schlitten hin zur Basis in eine Ruhestellung zu bewegen. In vorteilhafter Weise ist die Feder eine Zugfeder und greift einerseits an dem der Basis zugewandten Ende des Schlittens und andererseits an der Basis an. Diese Ausgestaltung ist insbesondere dann vorteilhaft, wenn die Vorrichtung eine solche zur Längenmessung ist und demgemäß dergestalt angewendet wird, dass die Basis vertikal nach oben ragt und die Säule sich waagrecht erstreckt. In diesem Fall ist die Auflagefläche für das Objekt auf der Säule befindlich, wie in diesem Fall die Normale der Auflagefläche des Objekts senkrecht zur Bewegungsrichtung des Schlittens verläuft. Die Feder dient dazu, den Schlitten mit einer definierten Rückstellkraft zur Berührung an das Objekt zu ziehen.

Kurzbeschreibung der Zeichnung, in der zeigen:
- Figur: 1 eine schematische Darstellung einer Vorrichtung zum Vermessen der Dicke und/oder Länge von Objekten, wobei diese Vorrichtung einen Schlitten aufweist, auf welchen ein Magnetband montiert ist.

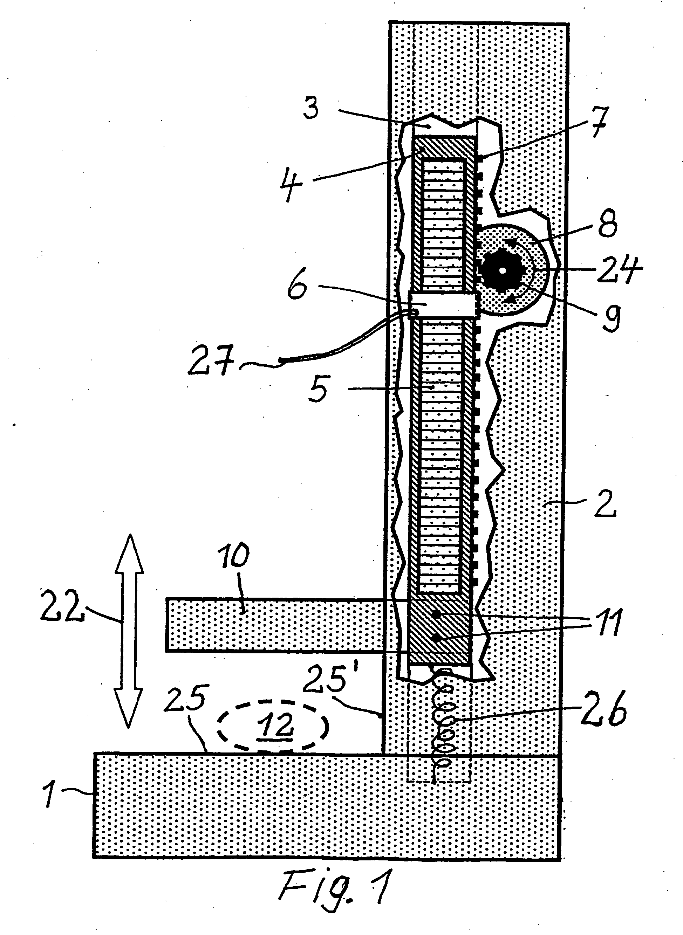

Gemäß der Figur 1 besteht die Vorrichtung zum Vermessen der Dicke und/oder Länge von Objekten aus einer Basis 1, welche auf ihrer Oberseite eine Auflagefläche 25 für ein Objekt 12 aufweist, welches beispielsweise eine Tablette, oder eine Pille oder ein Oblong sein kann. Auf der Basis 1 erhebt sich, vorzugsweise senkrecht zur Auflagefläche 25, eine Säule 2, wobei vorzugsweise die Längsachse der Säule 2 und die Normale der Auflagefläche 25 parallel verlaufen. An oder in der Säule 2 ist beweglich ein Schlitten 4 montiert. Vorzugsweise kann in die Säule 2 eine Längsnut 3 eingefräst sein, in welcher der Schlitten 4 geführt ist. Zum Antrieb des Schlittens kann derselbe eine Zahnung 7 aufweisen, in welche ein Antriebszahnrad 9 kämmt, wobei das Antriebszahnrad 9 mittels eines Elektromotors 8 angetrieben wird. Die Drehung des Elektromotors ist reversibel, was durch einen gekrümmten Bewegungsdoppelpfeil 24 dargestellt ist, so dass bei Drehung des Antriebszahnrades 9 der Schlitten 4 innerhalb der Nut 3 hin und zurück verfahrbar ist.

Auf dem Schlitten 4 ist ein Magnetband 5 mit einer Polteilung fest angeordnet, so dass bei einer Bewegung des Schlittens 4 das Magnetband 5 mitgenommen wird. Dem Magnetband 5 gegenüberstehend ist ein Magnetfeldsensor 6 angeordnet, welcher feststehend montiert ist, vorzugsweise an der Säule 2, so dass sich bei einer Bewegung des Schlittens 4 das Magnetband 5 über den Magnetfeldsensor 6 hinweg bewegt und derselbe diese Bewegung feststellt. Der Magnetfeldsensor 6 ist über ein Kabel 27 mit einer nicht gezeigten elektrischen Auswerteschaltung verbunden, wobei die Auswerteschaltung auch in den Magnetfeldsensor 6 integriert sein kann.

Am Schlitten 4, hier am unteren Ende des Schlittens 4, ist ein auskragender Arm 10 angeordnet, welcher waagrecht über die Auflagefläche 25 des Objektes 12 ragt und welcher mittels Schrauben 11 am Schlitten 4 befestigt ist, so dass der Arm 10 die Bewegungen des Schlittens 4 mitmacht. Der Arm 10 dient zur Auflage bzw. Anlage auf das Objekt bei der Durchführung eines Dickenmessvorgangs. Die in der Figur 1 gezeigte Ausgestaltung der Vorrichtung in der gezeigten Stellung, nämlich mit waagrecht angeordneter Basis und senkrecht angeordneter Säule, dient vorzugsweise zur Messung der Dicke von vorzugsweise pharmazeutischen Objekten.

Die Auswerteschaltung wertet die aus dem Magnetfeldsensor 6 kommenden Zählimpulse aus, deren jeweilige Anzahl einer bestimmten gefahrenen Wegstrecke des Schlittens 4 und somit des Armes 10 entspricht, was auf einem Display angezeigt werden kann.

Daneben kann in gleicher oder ähnlicher Ausgestaltung die Vorrichtung zur Längenmessung verwendet werden. In diesem Fall bildet die Säule 2 die Basis und ist waagrecht angeordnet, die Basis 1 ragt vertikal in die Höhe, so dass die Vorrichtung der Figur 1 um 90 Grad im Uhrzeigersinn gedreht erscheint. In diesem Fall kann des Weiteren an dem der Basis 1 zugewandten Ende des Schlittens 4 und der Basis 1 eine Zugfeder 26 angreifen, welche bestrebt ist, den Schlitten 4 mitsamt dem auskragenden Arm in Richtung zur Basis in eine Ruhestellung zu ziehen.

Wenn beispielsweise, wie im gezeigten Beispiel in Figur 1, die Vorrichtung mit der Basis waagrecht steht und sich damit die Säule 2 vertikal nach oben erhebt, ist keine Zugfeder oder Druckfeder notwendig, weil der Schlitten 4 unter dem Einfluss der Schwerkraft sich nach unten zu bewegen bestrebt ist.

Wenn hingegen die Vorrichtung als Längenmessvorrichtung verwendet wird und die Basis 1 vertikal gerichtet und die Säule 2 waagrecht gerichtet ist, so kann eine weitere Auflagefläche 25' auf der Säule 2 vorgesehen sein, um die Länge eines Objektes zu messen. Dann verläuft die Normale der Auflagefläche 25' senkrecht zur Längsachse des Schlittens 4 bzw. des Magnetbandes 5, welcher waagrecht verfährt. In diesem Fall ist das Anbringen einer Zugfeder zwischen dem der Basis1 zugewandten Ende des Schlittens 4 und der Basis vorteilhaft, weil die Zugfeder 26 bestrebt ist, den Schlitten 4 in eine Ruhestellung hin zur Basis 1 und damit auf das Objekt hin zu bewegen. Der auskragende Arm 10 bildet hier einen vertikal nach oben stehenden Anschlagsbacken für das Objekt.

Aus diesem Grund kann die Vorrichtung der Figur 1 auch um 90 Grad nach rechts im Uhrzeigersinn geschwenkt werden, ohne weitere Manipulationen vornehmen zu müssen, um nacheinander die Dicke und die Länge eines Objektes festzustellen.

### Gewerbliche Anwendbarkeit:

Die Erfindung ist insbesondere im pharmazeutischen Bereich zur Dicken- und/oder Längenvermessung von Tabletten, Pillen oder Oblongs gewerblich anwendbar. Aufgrund der hohen Genauigkeit der heute erhältlichen magnetischen Längenmesssysteme können derartige pharmazeutische Produkte sehr genau hinsichtlich ihrer Dicke bzw. Länge vermessen werden, wobei die Ausgestaltung der Erfindung mit verfahrbarem Schlitten eine sehr schnelle Messaufnahme gestattet.

### Bezugszeichenliste

- 1: Basis
- 2: Säule
- 3: Nut
- 4: Schlitten
- 5: Magnetband
- 6: Magnetfeldsensor
- 7: Zahnung
- 8: Elektromotor
- 9: Antriebszahnrad
- 10: Arm
- 11: Schrauben
- 12: Objekt
- 22, 24: Bewegungsdoppelpfeile
- 25, 25': Auflagefläche des Objektes
- 26: Zugfeder
- 27: Kabel

## Patentansprüche

1. Vorrichtung zum Vermessen der Dicke und/oder Länge von Objekten (12) von fester oder gelartiger Konsistenz, insbesondere von pharmazeutischen Objekten, wie Tabletten, Pillen oder Oblongs, wobei die Vorrichtung aus einer Basis (1) besteht, auf welcher sich eine Säule (2) senkrecht erhebt, und entweder die Basis (1) oder die Säule (2) eine Auflagefläche (25) für das zu messende Objekt (12) aufweist, wobei längs der Säule (2) ein magnetisches Längenmesssystem angeordnet ist bestehend aus einem eine Vielzahl von Polteilungen aufweisenden Magnetband (5) und einem dem Magnetband (5) gegenüber befindlichen, feststehend montierten Magnetfeldsensor (6) und aus einer an den Magnetfeldsensor (6) angeschlossenen elektrischen Auswerteschaltung, wobei das Magnetband (5) auf einem Schlitten (4) montiert ist, welcher an oder in der Säule (2) längs der Säule (2) am Magnetfeldsensor (6) vorbei mittels einer einen Elektromotor (8) zum Bewegen des Schlittens (4) aufweisenden Bewegungseinrichtung (7) motorisch beweglich gehaltert ist und an dem Magnetband (5) ein auskragender Arm (10) angreift, welcher die Bewegung des Magnetbandes (5) mitzumachen imstande ist, zur Anlage an dem zu messenden Objekt.

2. Vorrichtung nach Anspruch 1, wobei innerhalb der Säule (2) eine Nut (3) angeordnet ist, in welcher der Schlitten (4) auf und ab oder hin und her beweglich gehaltert ist.

3. Vorrichtung nach Anspruch 1, wobei die Bewegungseinrichtung eine Zahnung (7) aufweist, welche seitlich am Schlitten (4) angeordnet ist, in welche ein Antriebszahnrad (9) kämmt, welches über den Elektromotor (8) antreibbar ist.

4. Vorrichtung nach Anspruch 1, wobei an dem Schlitten (4) eine Feder (26) angreift, deren Federkraft bestrebt ist, den Schlitten (4) hin zur Basis (1) in eine Ruhestellung zu bewegen.

5. Vorrichtung nach Anspruch 4, wobei die Feder (26) eine Zugfeder ist und einerseits an dem der Basis zugewandten Ende des Schlittens (4) und andererseits an der Basis (1) angreift.

## Claims

1. A device for measuring the thickness and/or the length of objects (12) having a solid or gel-like consistency, especially pharmaceutical objects such as tablets, pills or oblongs, whereby the device consists of a base (1) from which a column (2) rises vertically, and either the base (1) or the column (2) has a contact surface (25) for the object (12) that is to be measured, whereby a magnetic length-measuring system is arranged along the column (2) and it consists of a magnetic tape (5) having a plurality of pole pitches and a magnetic-field sensor (6) stationarily mounted opposite to the magnetic tape (5), and it consists of an electric evaluation circuit connected to the magnetic-field sensor (6), whereby the magnetic tape (5) is mounted on a carriage (4) which is secured on or in the column (2) in such a way that a movement device (7) equipped with an electric motor (8) for moving the carriage (4) can move the carriage (4) along the column (2) past the magnetic-field sensor (6), and a protruding arm (10) that is capable of following the movement of the magnetic tape (5) engages with the magnetic tape (5) for purposes of making contact with the object that is to be measured.

2. The device according to Claim 1, whereby a groove (3) in which the carriage (4) is held so that it can move up and down or back and forth is arranged inside the column (2).

3. The device according to Claim 1, whereby the movement device has a toothed rack (7) which is arranged laterally on the carriage (4) and which intermeshes with a drive gear wheel (9) that can be driven by the electric motor (8).

4. The device according to Claim 1, whereby a spring (26) engages with the carriage (4) and its spring force strives to move the carriage (4) towards the base (1) into a resting position.

5. The device according to Claim 4, whereby the spring (26) is a tension spring and, on the one hand, it engages with the end of the carriage (4) facing the base and, on the other hand, it engages with the base (1).

## Revendications

1. Dispositif de mesure de l'épaisseur et/ou de la longueur d'objets (12) de consistance solide ou de consistance de gélule, en particulier d'objets pharmaceutiques tels que des comprimés, des pilules ou des oblongs, ledit dispositif comprenant une base (1) sur laquelle s'élève perpendiculairement une colonne (2), la base (1) ou la colonne (2) présentant une surface d'appui (25) pour l'objet (12) à mesurer, un système magnétique mesureur de longueur étant disposé le long de la colonne (2) et comprenant une bande magnétique (5) dotée d'une pluralité de pas polaires ainsi qu'un capteur de champ magnétique fixe (6) monté face à ladite bande magnétique (5) et présentant un circuit électrique d'évaluation connecté au capteur de champ magnétique (6), la bande magnétique (5) étant montée sur un coulisseau (4) supporté de façon mobile sur ou dans la colonne (2) et pouvant se déplacer le long de la colonne (2) en passant derrière le capteur de champ magnétique (6) à l'aide d'un organe de déplacement (7) présentant un moteur électrique (8) servant à déplacer le coulisseau (4) et un bras en saillie (10) ayant prise sur la bande magnétique (5), lequel est en mesure de suivre le mouvement de la bande magnétique (5) pour être placé sur l'objet à mesurer.

2. Dispositif selon la revendication 1, présentant une rainure (3) disposée à l'intérieur de la colonne (2), rainure dans laquelle le coulisseau (4) est logé de façon mobile, de sorte qu'il puisse décrire des mouvements de haut en bas et vice versa ou des mouvements de va-et-vient.

3. Dispositif selon la revendication 1, dans lequel l'organe de déplacement présente une denture (7) disposée sur la face latérale du coulisseau (4), une roue dentée d'entraînement (9) s'engrenant dans ladite denture pouvant être actionnée par le moteur électrique (8).

4. Dispositif selon la revendication 1, comprenant un ressort (26) qui a prise sur le coulisseau (4) et dont la force tend à déplacer le coulisseau (4) vers la base (1) dans une position de repos.

5. Dispositif selon la revendication 4, dans lequel le ressort (26) est un ressort de traction ayant prise d'une part sur l'extrémité du coulisseau (4) dirigée vers la base et d'autre part sur la base (1).
